# EUROPEAN PATENT SPECIFICATION

(11) **EP 0 443 416 B1**
(45) Date of publication and mention of the grant of the patent: **06.09.1995**
(21) Application number: 91101955.2
(22) Date of filing: 12.02.1991
(51) Int. Cl.: G05D 23/13, F16K 31/00

(54) **Energy conservation and anti-scald/burn single handle valve construction**
Energiesparende und verbrühsichere Einhebelmischbatterie
Robinet monocommande économiseur d'énergie et anti-échauffement

(30) Priority: 20.02.1990 US 481238
(43) Date of publication of application: 28.08.1991
(73) Proprietor: MOEN INCORPORATED, Elyria, Ohio 44036 (US)
(72) Inventor: Jeffress, Ronald E., Avon Lake, Ohio 44012 (US)
(74) Representative: Grünecker, Kinkeldey, Stockmair & Schwanhäusser Anwaltssozietät

(56) References cited:
- US-A- 4 210 284
- US-A- 4 227 646
- US-A- 4 778 104
- US-A- 4 782 853
- PATENT ABSTRACTS OF JAPAN vol. 14, no. 460 (M-1032) 04 October 90,& JP-A-21 83023

## Description

The present invention relates to a mixing valve of the type as described in the preamble of claim 1.

A mixing valve of this type is disclosed in US-A-4 782 853. The known mixing valve will find use as a shower/tub control or in a lavoratory or kitchen faucet. Conventional water control valves have no means to detect and automatically limit the flow of excessively hot water.

Anti-scald devices that are known in the art, such as that shown in US-A-4 778 104 or US-A-4 210 284, are installed at or near the outlet of the already mixed water, i.e. within a shower head or a tub sprout, or slightly before these devices in the water path, and therefore have a relatively long reaction or recovery time.

US-A-4 227 646 describes a temperature-responsive valve capable of controlling the flow of a fluid according to the temperature of the fluid. The valve member includes a helically wound spring made of a shape memory effect material and is biased by a further spring. The valve is described to be used in water-cooling systems of motor vehicles and is shown to be inserted into the passage line of cooling fluid.

A primary purpose of the invention is to provide a mixing valve which has means for sensing temperature and controlling flow when the temperature exceeds a predetermined maximum.

Another purpose of the invention is a simply constructed reliable valve construction including means for restricting flow when the temperature of water flowing through the valve exceeds a predetermined limit.

Another purpose of the invention is to provide a single handle mixing valve which provides automatic temperature protection in a very economical construction.

Another purpose of the invention is to provide a mixing valve which has a temperature responsive flow restrictor moved into a flow limiting position by the use of a shaped memory metal actuator.

Another purpose of the invention is to provide a valve construction, normally placed in close proximity to the sources of hot and cold water, which reliably restricts flow under excessive temperature conditions.

Another purpose is a mixing valve construction of the type described in which the flow restrictor moves in the area of lowest flow velocity and in which the memory metal actuator is positioned in the area of greatest flow velocity.

There is a substantial need in the plumbing art for a valve which is responsive to excessive water temperature, both in terms of energy conservation and in preventing a valve user from being scalded or burned. Particularly in the area of shower/tub controls, it is necessary to prevent an unsuspecting water user from being subjected to a sudden surge of hot water.

The present invention as claimed in claim 1 uniquely incorporates an antiscald mechanism within a mixing or control valve.

Quick detection and reaction reduces the amount of high temperature water in the delivery system. This has several benefits. First, the presence of hot water can quickly be detected and throttled down to a hold condition to await adjustment by the user to a more moderate temperature. This provides a saving in both water and heat energy when the faucet is turned on in the full hot position and left to purge itself of ambient temperature water. Second, when the flow has been throttled down, there is less hot water in the delivery system and thus less heat is absorbed by the system. When cooler flow is restored there is less heat to draw from the system, thus an additional advantage in recovery time. Last, because of the smaller volume of hot water, the thermal mass of the delivery system more easily mitigates the water temperature and further reduces the risk of delivery of high temperature water to the outlet. This is particularly advantageous in shower/tub installations where distance from the control valve to the outlet can be very lengthy.

The valve includes a movable flow restrictor. The actuator for the flow restrictor as disclosed herein may be made of a nickel-titanium alloy known commercially as "memory metal" and which is disclosed in US-A- 4,778,104. Such a material can be formed into a predetermined shape, for example a coil spring, and will retain that shape under normal water temperature conditions. If water at an excessive temperature, above a predetermined limit, is applied to the actuator spring, the spring will either contract or expand, depending upon the parameters used in initially forming the spring. The expansion or contraction provides the means for moving the flow restrictor from a position in which it is normally unrestrictive to water flow through the valve to a position in which it substantially, but desirably not completely, limits flow through the valve. The flow restrictor will remain in the flow limiting position as long as the water within the valve remains at an elevated temperature. The actuator is cooled down by having the restrictor permit leakdown of water from the valve to the discharge or outlet of the valve, but at a sufficiently slow rate so as to not provide any hazardous conditions to a water user.

Embodiments of the invention are illustrated diagrammatically in the following drawings wherein:
Figure 1 is a partial axial section, illustrating the mixing valve of the present invention positioned within a valve housing and showing the valve in a normally closed position,
Figure 2 is a partial axial section, showing the mixing valve of Figure 1 in an open position,
Figure 3 is a partial axial section, showing the mixing valve of Figures 1 and 2 in a flow limiting position,
Figure 4 is a partial axial section, showing a modified form of mixing valve,
Figure 5 is a partial axial section, showing the mixing valve of Figure 4 in a flow limiting position,
Figure 6 is a partial axial section of a further form of mixing valve, and
Figure 7 is a partial axial section, showing the mixing valve of Figure 6 in a flow limiting position.

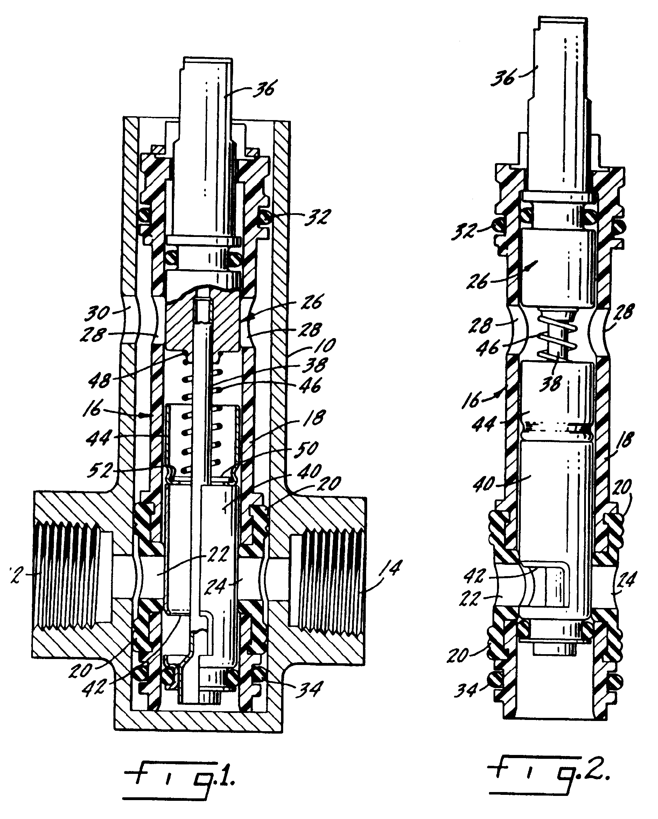

In Figure 1, an energy conservation and anti-scald/burn single handle mixing valve is shown. The valve has a valve housing 10 comprising a hot water inlet port 12 and a cold water inlet port 14. Positioned within the housing 10 is a mixing valve in the form of a cartridge and generally designated at 16. The cartridge 16, which may be substantially similar to the mixing valve cartridges disclosed in the above-designated patents, includes a valve body 18 having seal members 20 at its hot water inlet port 22 and its cold water inlet port 24, and a movable valve stem or valve member designated generally at 26. The valve body 18 includes the described inlet ports and a plurality of outlet ports 28 which are in alignment with an outlet port 30 in housing 10. Valve body 18 mounts seal rings 32 and 34 which prevent water from leaking outwardly from housing 10.

Valve stem 26 includes a handle receiving portion 36 which extends outwardly from the housing and from the valve body and which is attached by a thin rod 38 to a hollow piston 40. In the closed position of Figure 1, piston inlet 42, which may be arcuate in circumferential configuration, is positioned interiorly of the valve body inlet ports 22 and 24 so that no water flows inside of the valve. The seal members 20 are urged against the exterior of the cylindrical piston 40 to prevent water flow into the valve interior.

Figure 2 shows the open position of the valve and stem 26 has been pulled outwardly from the valve body to the point that the stem piston inlet 42 is in radial alignment with the hot and cold water inlet ports so that a mixture of water from these ports may reach the interior of the valve body and flow inside of piston 40. Under normal operating conditions, water will then flow through the interior of the valve body to outlets 28 and housing outlet 30.

A flow restrictor or sleeve 44 is mounted coaxial with piston 40 about rod 38 and is movable within the valve body generally adjacent its periphery. A memory metal coil spring 46 extends coaxially about rod 38 and is fastened at its upper end 48 to a portion of stem 26. An innermost coil 50 of spring 46 has an enlarged diameter and fits within a recess 52 in the innermost end of sleeve 44 to thereby attach the sleeve to the spring.

Under normal operating conditions, the sleeve will be in the Figure 2 position and will not restrict flow through the valve. In the event water of excessive temperature reaches the interior of the valve, either because stem 26 is in the full hot position, or because of a sudden decrease in the supply of cold water, spring 46 will contract to the Figure 3 position. This has the effect of moving sleeve 44 to a position in which it masks valve body outlet ports 28, thus substantially restricting or limiting flow through the valve. Sleeve 44 will remain in this position as long as spring 46 is in the contracted condition and the spring will remain contracted as long as the temperature of the water within the valve is above a predetermined maximum limit. When the water temperature within the valve body decreases, the spring will assume its normal configuration, as illustrated in Figures 1 and 2, and this will push the sleeve 44 to the open position of those figures.

The outer diameter of flow restricting sleeve 44 is slightly less than the interior diameter of the valve body. This provides for a leakage of water around the restrictor to the outlet ports of the valve cartridge when the restrictor is in the flow limiting position. This enables the hot water within the valve cartridge to be purged so that the valve may return to a normal operating position.

It is important to note that the path of movement of sleeve 44 is directly adjacent the periphery or the inner wall of the valve body which is the area of lowest water velocity. Spring 46, however, is positioned generally at the center of the tubular passage formed between the valve body inlets and outlets and therefore is at the point of highest water velocity. This has the effect of insuring that water temperature in the valve is correctly sensed by the spring and of insuring that there is the least resistance to movement of sleeve 44 when it must of necessity move to a closed or open position. Sleeve 44 is open at its opposite ends and so provides no restriction to normal water flow through the valve.

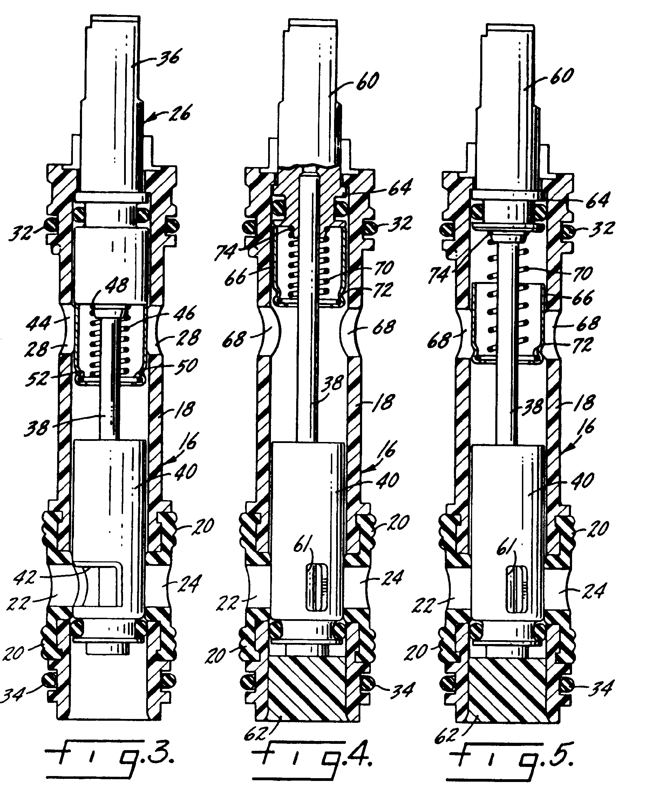

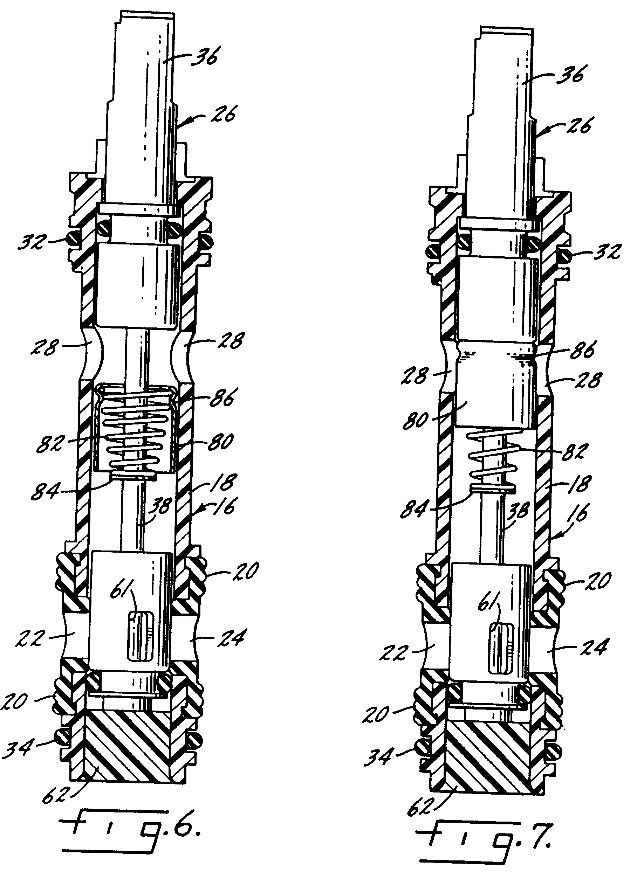

In the embodiment of Figures 4 and 5, in which like parts have been given like numbers, valve stem 60 only rotates and it is prevented from reciprocal movement by a plug 62 at the bottom of the valve cartridge and by an outwardly-extending shoulder 64 adjacent the upper end of the stem. Since valve stem 60 cannot axially move to a closed position, as in the Figures 1-3 embodiment, the valve stem has a plurality of circumferentially spaced inlet ports 61, rather than a single arcuate inlet port. The mixing valve of Figures 4 and 5 more customarily finds utility in a shower/tub installation in which it is normally not necessary to adjust water volume, but only water temperature.

In the Figures 4 and 5 embodiment, restrictor sleeve 66 is positioned above valve body outlet ports 68 and is held in that position by a memory metal spring 70 which is attached by an enlarged coil 72 to one end of the sleeve and by a coil 74 to a portion of the valve stem. The spring of the Figure 4 and 5 embodiment is normally contracted, whereas, the memory metal spring in the Figures 1-3 embodiment is normally expanded. In the Figures 4 and 5 configuration, when spring 70 senses water at an elevated temperature, the spring will expand, moving sleeve 66 from the upper position of Figure 4 to the flow restricting position of Figure 5.

In the valve of Figures 6 and 7, like parts have again been given like numbers. Restrictor sleeve 80 encloses a memory metal spring 82 which is supported on a ring 84 attached to rod 38. The upper coil of the spring is fixed to sleeve 80 by a circumferential sleeve recess 86.

Spring 82 is contracted in the normal water flow position of Figure 6 and water from the inlet ports flows around the spring and through the interior of the sleeve. When the spring senses water at an excessive temperature, the spring expands, moving the sleeve to the Figure 7 position in which it masks the sleeve outlet ports.

Whereas the preferred form of the invention has been shown and described herein, it should be realized that there may be many modifications, substitutions and alterations thereto.

## Claims

1. A mixing valve, including a valve body (18) having hot and cold water inlets (22, 24) and at least one outlet (28, 68); and including a mixing valve member (26, 60) positioned within said valve body (18) and controlling the proportion of hot and cold water that flows from said inlets (22, 24) to the outlet (28, 68), **characterized by** a water flow restrictor (44, 66, 80) positioned within said valve body (18) and movable from a normal flow position in which outlet flow is unobstructed to a position in which the restrictor (44, 66, 80) partially closes said outlet (28, 68) to limit the flow therefrom, and a shaped memory metal actuator (46, 70, 82) positioned within said valve body (18) to move said restrictor (44, 66, 80) from the normal flow position to said flow limiting position when the water within said valve body (18) exceeds a predetermined temperature, for providing a water temperature sensing/flow control mixing valve.

2. The mixing valve of claim 1 further characterized in that said restrictor (44, 66, 80) moves within said valve body (18) in the area of lowest flow velocity.

3. The mixing valve of claim 1 or 2 further characterized in that said shaped memory metal actuator (46, 70, 82) is positioned within said valve body (18) in an area of highest flow velocity.

4. The mixing valve of any one of claims 1 to 3 further characterized in that said restrictor (44, 66, 80) is in the shape of a sleeve, movable axially within said valve body (18) toward and away from the outlet (28, 68).

5. The mixing valve of claim 4 further characterized in that the opposite ends of said sleeve are generally open.

6. The mixing valve of any one of claims 1 to 5 further characterized in that said shaped memory metal actuator (46, 70, 82) has the configuration of a coiled spring and is positioned coaxial with respect to the movement of said restrictor (44, 66, 80).

7. The mixing valve of any one of claims 4 to 6 further characterized in that said shaped memory metal actuator (46) is in the configuration of a coil spring which is attached to said sleeve (44) and which contracts to move said sleeve (44) to said flow restricting position.

8. The mixing valve of any one of claims 4 to 6 further characterized in that said shaped memory metal actuator (70, 82) has the configuration of a coil spring, is attached to said sleeve (66, 80), and expands to move said sleeve (66, 80) to the flow limiting position.

9. The mixing valve of any one of claims 1 to 8, further characterized in that said restrictor (44, 66, 80) is an axially movable open-ended sleeve which moves within said valve body (18) along a path adjacent to the periphery thereof, said memory metal actuator (46, 70, 82) is a coil spring attached to said sleeve and extending coaxially therein.

10. The mixing valve of claim 9 further characterized in that said memory metal coil spring (46, 70, 82) is attached to said mixing valve member (26, 60).

11. The mixing valve of any one of claims 1 to 9 further characterized in that said valve member (26, 60) rotates to proportion flow and said restrictor (44, 66, 80) moves axially to control flow.

12. The mixing valve of claim 11 further characterized in that said valve member (26) moves axially within said valve body (18) to regulate the volume of water passing through said mixing valve.

13. The mixing valve of claim 11 further characterized in that said valve body (18) includes means (62) preventing axial movement of said valve member (26, 60).

## Patentansprüche

1. Mischventil mit einem Ventilgehäuse (18), das Einlässe (22, 24) für heißes und kaltes Wasser und mindestens einen Auslaß (28, 68) enthält, mit einem Mischventilteil (26, 60), das innerhalb des Ventilgehäuses (18) angeordnet ist und den Anteil des von den Einlässen (22, 24) zum Auslaß (28, 68) fließenden heißen und kalten Wassers regelt, **gekennzeichnet durch** einen innerhalb des Ventilkörpers (18) angeordneten Wasserströmungsbegrenzer (44, 66, 80), der von einer normalen Strömungsposition, in der die Auslaßsströmung unbehindert ist, in eine Position bewegbar ist, in der der Begrenzer (44, 66, 80) den Auslaß (28, 68) teilweise schließt, um die austretende Strömung zu begrenzen, und durch einen geformten Betätiger (46, 70, 82) aus Memorymetall, der innerhalb des Ventilgehäuses (18) angeordnet ist, um den Begrenzer (44, 66, 80) aus der normalen Strömungsposition in die strömungsbegrenzende Position zu bewegen, wenn das Wasser innerhalb des Ventilgehäuses (18) eine vorbestimmte Temperatur übersteigt, um dadurch ein wassertemperaturfühlendes/strömungsregelndes Mischventil zu schaffen.

2. Mischventil nach Anspruch 1 ferner, **dadurch gekennzeichnet**, daß sich der Begrenzer (44, 66, 80) innerhalb des Ventilgehäuses (18) im Bereich der niedrigsten Strömungsgeschwindigkeit bewegt.

3. Mischventil nach Anspruch 1 oder 2, ferner **dadurch gekennzeichnet,** daß der geformte Betätiger (46, 70, 82) aus Memorymetall innerhalb des Ventilgehäuses (18) in einem Bereich höchster Strömungsgeschwindigkeit angeordnet ist.

4. Mischventil nach einem der Ansprüche 1 bis 3, ferner **dadurch gekennzeichnet**, daß der Begrenzer (44, 66, 80) die Form einer Hülse hat, die innerhalb des Ventilgehäuses in Richtung auf den Auslaß (28, 68) und von ihm weg axial bewegbar ist.

5. Mischventil nach Anspruch 4, ferner **dadurch gekennzeichnet**, daß gegenüberliegende Enden der Hülse im wesentlichen offen sind.

6. Mischventil nach einem der Ansprüche 1 bis 5, ferner **dadurch gekennzeichnet**, daß der geformte Betätiger (46, 70, 82) aus Memorymetall die Form einer Wickelfeder aufweist und koaxial bezüglich der Bewegung des Begrenzers (44, 66, 80) angeordnet ist.

7. Mischventil nach einem der Ansprüche 4 bis 6, ferner **dadurch gekennzeichnet,** daß der geformte Betätiger (46) aus Memorymetall die Form einer Wickelfeder hat, die an der Hülse (44) befestigt ist, und die sich zusammenzieht, um die Hülse (44) in die strömungsbeschränkende Stellung zu bewegen.

8. Mischventil nach einem der Ansprüche 4 bis 6, ferner **dadurch gekennzeichnet,** daß der geformte Betätiger (70, 72) aus Memorymetall die Form einer Wickelfeder hat, an der Hülse (66, 80) angeordnet ist und sich ausdehnt, um die Hülse (66, 80) in die strömungsbegrenzende Stellung zu bewegen.

9. Mischventil nach einem der Ansprüche 1 bis 8, ferner **dadurch gekennzeichnet,** daß der Begrenzer (44, 66, 80) eine sich in Axialrichtung bewegende, offenendige Hülse ist, die sich innerhalb des Ventilgehäuses (18) entlang eines Weges benachbart zu ihrem Umfang bewegt, wobei der Betätiger (46, 70, 82) aus Memorymetall eine Wickelfeder ist, die an der Hülse angeordnet und sich axial in ihr erstreckt.

10. Mischventil nach Anspruch 9, ferner **dadurch gekennzeichnet,** daß die Wickelfeder (46, 70, 82) aus Memorymetall am Mischventilteil (26, 60) angeordnet ist.

11. Mischventil nach einem der Ansprüche 1 bis 9, ferner **dadurch gekennzeichnet,** daß sich das Ventilteil (26, 60) dreht, um das Strömungsverhältnis einzustellen, und daß sich der Begrenzer (44, 66, 80) axial bewegt, um die Strömung zu regeln.

12. Mischventil nach Anspruch 11, ferner **dadurch gekennzeichnet**, daß das Ventilteil (26) sich in Axialrichtung innerhalb des Ventilgehäuses (18) bewegt, um das durch das Mischventil hindurchtretende Wasservolumen zu regulieren.

13. Mischventil nach Anspruch 11, ferner **dadurch gekennzeichnet,** daß das Ventilgehäuse (18) eine Einrichtung (62) enthält, um eine Axialbewegung des Ventilteils (26, 60) zu verhindern.

## Revendications

1. Mélangeur comportant un corps (18) ayant des entrées d'eau chaude et d'eau froide (22, 24) et au moins une sortie (28, 68), et un obturateur mélangeur (26, 60) placé dans le corps (18) et commandant la proportion d'eau chaude et d'eau froide qui va des entrées (22, 24) à la sortie (28, 68), caractérisé par un réducteur de débit d'eau (44, 66, 80) placé dans le corps (18) et mobile d'une position de débit normal dans laquelle le débit de sortie n'est pas réduit à une position dans laquelle le réducteur de débit (44, 66, 80) ferme partiellement la sortie (28, 68) pour limiter le débit qui en sort, et un actionneur en métal à mémoire façonné (46, 70, 82) placé dans le corps (18) pour déplacer le réducteur de débit (44, 66, 80) de la position de débit normal à la position de limitation de débit lorsque l'eau se trouvant dans le corps (18) dépasse une température déterminée, pour fournir un mélangeur à détection de la température de l'eau et réglage du débit.

2. Mélangeur selon la revendication 1, caractérisé en outre par le fait que le réducteur de débit (44, 66, 80) se déplace dans le corps (18) dans la zone de plus faible vitesse d'écoulement.

3. Mélangeur selon l'une des revendications 1 et 2, caractérisé en outre par le fait que l'actionneur en métal à mémoire façonné (46, 70, 82) est placé dans le corps (18) dans une zone de plus grande vitesse d'écoulement.

4. Mélangeur selon l'une des revendications 1 à 3, caractérisé en outre par le fait que le réducteur de débit (44, 66, 80) est un manchon mobile axialement dans le corps (18) vers la sortie (28, 68) et en sens inverse.

5. Mélangeur selon la revendication 4, caractérisé en outre par le fait que les extrémités opposées du manchon sont de manière générale ouvertes.

6. Mélangeur selon l'une des revendications 1 à 5, caractérisé en outre par le fait que l'actionneur en métal à mémoire façonné (46, 70, 82) est un ressort hélicoïdal et est placé coaxialement relativement au mouvement du réducteur de débit (44, 66, 80).

7. Mélangeur selon l'une des revendications 4 à 6, caractérisé en outre par le fait que l'actionneur en métal à mémoire façonné (46) est un ressort hélicoïdal qui est attaché au manchon (44) et qui se contracte pour mener celui-ci en position de réduction de débit.

8. Mélangeur selon l'une des revendications 4 à 6, caractérisé en outre par le fait que l'actionneur en métal à mémoire façonné (70, 82) est un ressort hélicoïdal, est attaché au manchon (66, 80) et se dilate pour mener celui-ci en position de limitation de débit.

9. Mélangeur selon l'une des revendications 1 à 8, caractérisé en outre par le fait que le réducteur de débit (44, 66, 80) est un manchon ouvert à ses extrémités et mobile axialement qui se déplace dans le corps (18) sur une trajectoire contiguë à la périphérie de celui-ci, et l'actionneur en métal à mémoire (46, 70, 82) est un ressort hélicoïdal attaché à ce manchon et s'étendant coaxialement dans celui-ci.

10. Mélangeur selon la revendication 9, caractérisé en outre par le fait que le ressort hélicoïdal en métal à mémoire (46, 70, 82) est attaché à l'obturateur mélangeur (26, 60).

11. Mélangeur selon l'une des revendications 1 à 9, caractérisé en outre par le fait que l'obturateur (26, 60) tourne pour proportionner le débit et le réducteur de débit (44, 66 80) se déplace axialement pour régler le débit.

12. Mélangeur selon la revendication 11, caractérisé en outre par le fait que l'obturateur (26) se déplace axialement dans le corps (18) pour régler le débit d'eau traversant le mélangeur.

13. Mélangeur selon la revendication 11, caractérisé en outre par le fait que le corps (18) comporte un moyen (62) empêchant un mouvement axial de l'obturateur (26, 60).
